# EUROPEAN PATENT SPECIFICATION

(11) **EP 4 307 142 B1**
(45) Date of publication and mention of the grant of the patent: **11.06.2025**
(21) Application number: 22382664.5
(22) Date of filing: 13.07.2022
(51) Int. Cl.: G06F 21/50, H04L 9/40, H04W 12/30, G06Q 20/32

(54) **UPDATE AGENT FOR MULTIPLE OPERATING SYSTEMS IN A SECURE ELEMENT**
AKTUALISIERUNGSMITTEL FÜR MEHRERE BETRIEBSSYSTEME IN EINEM SICHEREN ELEMENT
AGENT DE MISE À JOUR POUR PLUSIEURS SYSTÈMES D'EXPLOITATION DANS UN ÉLÉMENT SÉCURISÉ

(43) Date of publication of application: 17.01.2024
(73) Proprietor: Giesecke+Devrient Mobile Security Germany GmbH, 81677 München (DE)
(72) Inventor: GIFRE, Clara, 08028 Barcelona (ES); PATINO, David, 08620 Sant Vicenc dels Horts (ES); RUAU, Federico, 08028 Barcelona (ES); GOMEZ JIMENEZ, Ruben, 08184 Palau-solità I Plegamans (ES)
(74) Representative: LKGLOBAL Lorenz & Kopf Patentanwalt Attorney at Law PartG mbB

(56) References cited:
- US-A1- 2014 025 940
- US-A1- 2015 072 726
- US-A1- 2015 193 224
- US-A1- 2018 241 744

## Description

The present invention relates to secure elements in general and in particular to a secure element fitted with an update agent for managing multiple operating systems.

### BACKGROUND OF THE INVENTION

Smart cards are widely used in a variety of systems such as mobile phones, payment cards, access cards, to provide identification, authentication, data storage and application processing.

Where the smart card contains security-critical applications and sensitive data, such as in the case of payment cards and the like, a secure element is used to store the data. A secure element is a tamper resistant element, TRE, that provides a secure memory and execution environment in which application code and application data can be securely stored and administered. The secure element ensures that access to the data stored on the card is provided only when authorized.

Such a secure element may exist in any form factor such as UICC, embedded SE, smartSD, smart microSD, etc.

A secure element may include one or more security domains (SDs), each of which includes a collection of data, such as operating system, personalization data, packages, applets, applications, and the like, which are authenticated using security keys. Thus, the operating system and applications are stored within the secure element in volatile and non-volatile memory modules, and are executed in a secured processor of the secure element.

The operating system of a secure element provides basic functionality to network access applications associated with a given operator, such as secure access to on-card storage, authentication and encryption.

US 2015/193224 A1 describes systems, methods, and computer-readable media for logging secure element updates of an electronic device. In one example embodiment, a method, at a secure element including a previously-installed secure element asset, includes, inter alia, receiving an update package, uninstalling the previously-installed secure element asset based on the received update package, installing a new secure element asset based on the received update package, and updating at least one of a counter on the secure element and a log on the secure element based on the installation of the new secure element asset.

US 2014/025940 A1 describes a secure element including a boot program comprises instructions for the execution a startup step to determine if a non-volatile memory stores an active operating system, and, in the affirmative, to launch execution of the operating system, an authentication step of a updater device, as a function of first authentication data determined by a secure element and second authentication data received from the updater device, and, in response to the authentication step, a storage step of a new operating system received from the update, device in the non-volatile memory and an activation step of the new operating system, when said instructions are executed by a microprocessor.

Recent smart card architectures allow loading several operating systems within a secure element, and thus the co-existence of multiple operating systems within the secure element. Although such solutions provide flexibility when deploying a secure element in the field, they require a high amount of memory within the secure element for hosting multiple operating systems.

As the size of the secure elements currently available is relatively small and the secure elements have only a limited storage capacity, loading multiple operating systems onto a secure element would be viable only for very small operating systems with limited functionality.

It is therefore desirable to provide a solution for managing multiple operating systems for a secure element which addresses the above-mentioned drawbacks.

### SUMMARY OF THE INVENTION

The invention is defined by the appended claims. The present invention addresses the above object by the subject-matter covered by the independent claims. Preferred embodiments of the invention are defined in the dependent claims.

According to a first aspect of the present invention, there is provided a method for managing a plurality of operating systems for a secure element by an update agent within the secure element. More specifically, the method comprises identifying a first operating system, OS1, being actively used by the secure element and identifying inactive operating systems within the secure element, which are not actively used by the secure element. If inactive operating systems have been identified, the update agent allocates these inactive operating systems to a storage provider.

By keeping only the active operating system within the secure element and outsourcing all inactive operating systems to a storage provider, that is, to a memory space outside the secure element, internal memory of the secure element is efficiently used. This allows to provide the secure element with larger operating systems with more differentiated functionality, as only one operating system is stored at a time within the secure element, while the remaining inactive operating systems are kept externally and ready for being (re-)loaded onto the secure element on demand.

In some embodiments of the present invention, identifying an operating system as active or inactive comprises checking a status indicator of the operating system, wherein the status indicator is a data structure located on the se-cure element and storing for each operating system of the plurality of operating systems a corresponding status.

In some embodiments of the present invention, the method comprises further receiving a request to load a second operating system, OS2, as a new active operating system on the secure element; performing a secure backup of the first operating system, OS1; and loading the second operating system, OS2, onto the secure element.

In some embodiments of the present invention, not only the active operating system is backed-up in a secure manner upon receiving a request to load or switch to another operating system, but also all the inactive operating systems which were initially in an inactive state within the secure element.

Performing a secure backup has the advantage that the outsourced operating systems are protected from accidental data loss, corruption, and unauthorized access.

Preferably, performing a secure backup of an operating system, the operating system being the first (active operating system) or one of the inactive operating systems, comprises creating an image of the operating system, and providing the operating system image to the storage provider to be stored thereon.

Preferably, the operating system image is created by encapsulating the operating system and securing it with cryptographic keys. Preferably, the encapsulated operating system is encrypted according to a predetermined security scheme and by cryptographic keys and/or key sets supported by the update agent.

By encapsulating the current software version and encrypting it with the up-date agent's private cryptographic key, a tamper resistant secured image of the operating system is obtained, reducing thus the risk of the backup operating systems being manipulated by a third party while being stored outside of the secure element.

In some embodiments of the present invention, when the second operating system is loaded, the update agent checks first whether there is a backup version of the second operating system already allocated within the storage provider. If there is such a backup version is allocated within the storage provider, the update agent retrieves the backup version, and replaces the first operating system with the backup version of the second operating system. The second operating system becomes thus the first currently active operating system loaded onto the secure element.

This allows a secure element having limited memory space to switch between various operating systems stored externally and to revert to a previously used operating system without being dependent on the free memory in the secure element.

In some embodiments of the present invention, if there is no backup version of the second operating system allocated within the storage provider, the update agent downloads the second operating system onto the secure element and replaces the first operating system with the downloaded second operating system. Preferably, the replacement step comprises installing the second operating system onto the secure element and deleting the first operating system from the secure element. As the first operating system has already been securely backed up within the storage provider, the first operating system can be deleted from the secure element, and the second operating systems becomes the new active operating system in use on the secure element.

Preferably, the update agent sets, upon downloading the second operating system or its backed up version, the status of the second operating system to active and the status of the first operating system to inactive.

In some embodiments of the present invention, the storage provider is at least one of the following: an electronic device the secure element is embedded on, a server, or a network cloud.

According to a second aspect of the present invention, there is provided an update agent for managing a plurality of operating systems for a secure element. The update agent is configured to perform the steps of identifying a first operating system, OS 1, being actively used by the secure element; identifying inactive operating systems within the secure element, which are not actively used by the secure element; and allocating the inactive operating systems to a storage provider.

Preferably, the update agent is configured to perform the method according to the first aspect.

Preferably, the update agent is configured after loading the second operating systems or the backed up version thereof, to set the status of the second operating system to active and the status of the first operating system to inactive.

According to a third aspect of the present invention, there is provided a secure element, SE, comprising an update agent according to the second aspect of the present invention. Preferably, the update agent is configured to perform the method according to the first aspect.

According to a further aspect of the present invention, there is provided an apparatus, comprising at least one processor, at least one memory including computer program code, and the at least one processor with the at least one memory and the computer program code, being arranged to cause the apparatus to at least perform identifying a first operating system, OS1, being actively used by a secure element; identifying inactive operating systems within the secure element, which are not actively used by the secure element; and allocating the inactive operating systems to a storage provider.

In a preferred embodiment the at least one processor with the at least one memory and the computer program code being arranged to cause the apparatus to perform, upon receiving a request to load a second operating system on the secure element, a secure backup of the first operating system and load the second operating system onto the secure element.

In a preferred embodiment the at least one processor with the at least one memory and the computer program code being arranged to cause the apparatus to check whether there is a backup version of the second operating system allocated within the storage provider; if there is a backup version allocated within the storage provider, retrieving the backup version, and replacing the first operating system with the backup version of the second operating system; and if there is no backup version of the second operating system allocated within the storage provider, installing the second operating system onto the secure element and deleting the first operating system.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
- FIG. 1: shows the architecture of a system including a secure element according to an embodiment;
- FIG. 2a: shows a method for managing a plurality of operating systems according to an embodiment;
- FIG. 2b: shows a method for managing a plurality of operating systems according to a further embodiment;
- FIGs. 3 and 4: show preferred implementations of steps of the method for managing a plurality of operating systems according to further embodiments;
- FIG. 5: shows several stages of the system of Fig. 1 during the execution of the method according to an embodiment;
- FIG. 6: shows a block diagram of components of an apparatus according to an embodiment.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

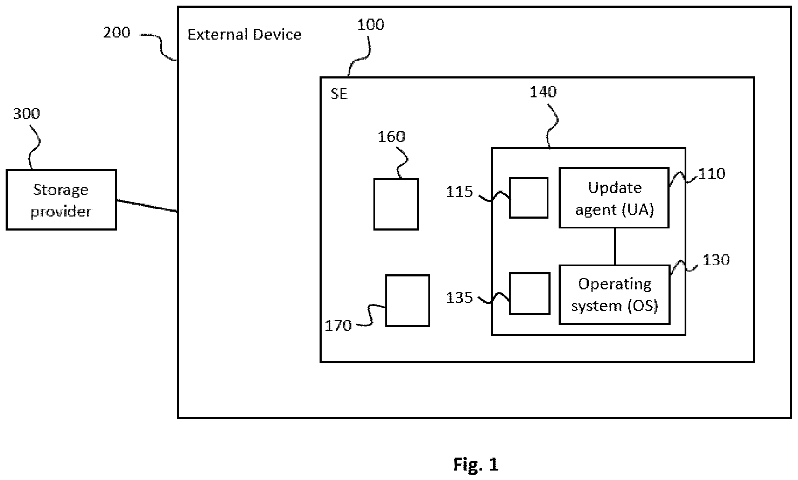

Fig. 1 shows the architecture of a system and flow of data for implementing a method for managing a plurality of operating systems according to an embodiment.

The system comprises a secure element 100 onboard in a device 200, and a storage provider 300.

The secure element 100 is for example a smart card embedded within the device 200. The device 200 is for instance a mobile device.

The secure element SE 100 may comprise a microprocessor 170, a communication interface 160, and a memory unit 140, which may comprise a volatile memory and a non-volatile memory. The microprocessor 170 may execute programs stored in the memory unit 140. Particularly, programs may be stored in a non-volatile memory while a volatile memory is used as workspace. In particular, the microprocessor 170 is configured to execute a boot program during startup of the secure element 100, wherein the boot program is responsible for launching execution of the operating system 130.

The secure element 100 may communicate with the device 200 through the interface 160 and/or via an update agent handler preferably provided on the device 200.

The memory 140 may store at least an update agent 110, which is a boot loader entity allowing the provisioning of software within the SE, at least one operating system 130, a cryptographic key 115 of the update agent 110, and a status indicator 135 of the operating system 130.

The update agent 110 is preferably the entry point for the software to be executed in the card respectively secure element 100.

The operating system 130 may be responsible for executing applications stored within the secure element 100, such as for example secure applications for payment services.

The status indicator 135 of the operating system 130 can take an active or inactive value. The status indicator may be implemented as a bit flag stored in the update agent 110. In case the secure element hosts a plurality of operating systems the status indicator may be implemented as an array or a list, each entry therein corresponding to one of the operating systems. Alternatively, the status indicator may be stored in the operating system 130.

The update agent 110 is the main entity in charge of the management of multiple operating systems in the secure element.

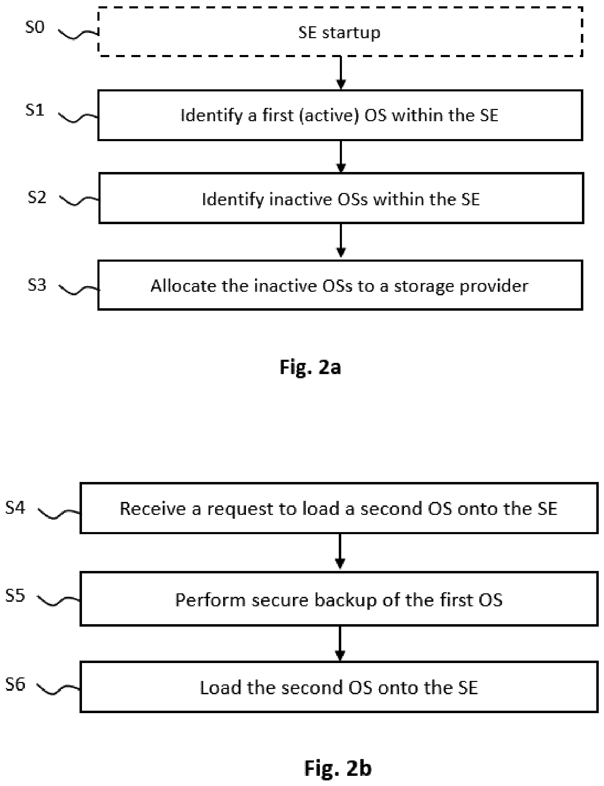

Fig. 2a is a flow chart which illustrates the main steps executed by the update agent for managing a plurality of operating systems for a secure element, such as the secure element 100 of Fig. 1. Fig. 2b shows further steps for managing a plurality of operating systems for a secure element, according to a preferred embodiment.

The procedure starts at step S1, after a preliminary step S0 in which a startup of the secure element took place. This preliminary step may be called during the boot process by an update agent handler instructing the update agent 110 to perform the SE startup.

At step S1, the update agent determines if there is an operating system active. This may be implemented by the update agent checking the status indicator 135, and identifying the active operating system.

If the status indicator of an operating system shows the value inactive, the update agent determines the corresponding operating systems as being inactive in step S2.

Then in step S3, the update agent 110 may allocate the inactive operating systems identified in step S2 to a storage provider, to be stored thereon. Preferably, the storage provider is a memory external of the secure element, such as a memory within the electronic device 200 the secure element 100 is embedded on. Alternatively, the storage provider 300 may be a server or a network cloud, with which the device 200 is able to communicate.

By identifying and allocating inactive operating systems to an external memory, internal memory on the secure element is freed up, as any not currently selected operating system is not occupying space in the SE. An inactive operating system, which has been outsourced to a storage provider, may be re-activated on demand later on.

The outsourcing procedure for inactive operating systems is depicted in Fig. 2a. The reactivation procedure of an outsourced operating system is depicted in Fig. 2b.

With reference to Fig. 2b, the reactivation of a backed up operating system may commence with the update agent 110 receiving, in step S4, a request to load a second operating system, OS2, as a new active operating system on the secure element. Before loading, that is, downloading and storing the second operating system, the update agent performs, in step S5, a secure backup of the active operating system, OS1, that is of the operating system currently in use on the secure element. In the next step S6, the new operating system is downloaded and stored within the secure element.

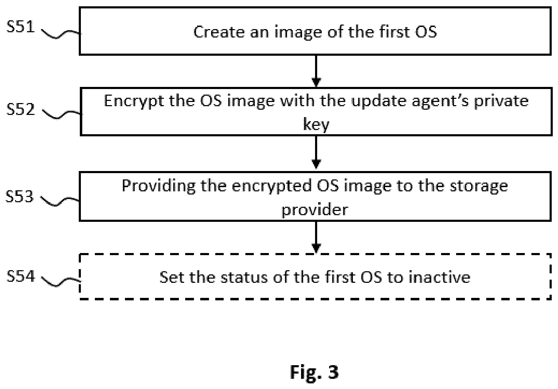

Fig. 3 shows a flow chart of a preferred implementation of step S5 in Fig. 2b, that is, of the step of performing a secure backup of the currently active operating system (referred to as first operating system).

With reference to Fig. 3, the update agent 110 decides if an operating system image is created and thus may create in a first step S51 an image of the first operating system.

Preferably, the update agent 110 creates the OS image by encapsulating the current OS version and securing it according to a security scheme with cryptographic keys supported by the update agent 110 (in step S52). In step S53 the update agent 110 sends the encrypted OS image to the storage provider 300. Preferably, this is done through the intermediary of an update agent handler via the communication interface 160 (c.f., Fig. 1). The update agent may additionally identify the OS image as being a "backup image".

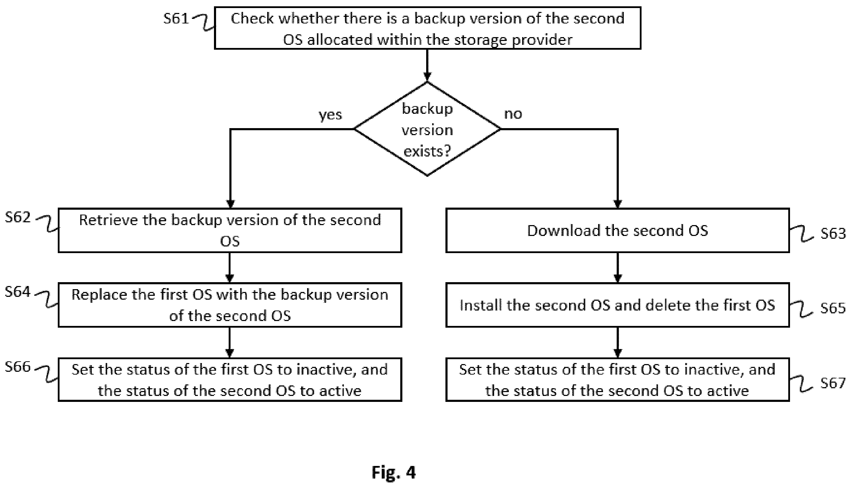

As next the update agent 110 may set in step S54 the status of the first OS to inactive, indicating thus that the first OS has been backed up, and hence can be removed from the memory 140 of the secure element 100. Step S54 is optional and may be performed instead at the end of step S6, as will be described below with reference to Fig. 4.

The steps performed according to the flow chart of Fig. 2a allow to free up memory within the SE 100, allowing thus to switch to another operating system or to install a brand-new operating system, without needing additional memory on the SE.

Fig. 4 shows a flow chart of a preferred implementation of step S6 in Fig. 2b, that is, of the step of loading/installing another operating system onto the SE. This another operating system can be a new operating system or a backed up outsourced operating system.

With reference to Fig. 4, in a first step S61 the update agent 110 checks whether there is a backup version of the second OS allocated within the storage provider.

If this is the case, the update agent 110 retrieves in step S62 the backed up version of the OS and replaces or switches the first OS on the SE 100 with the retrieved backup version in step S64.

In step S66 the update agent 110 may then set the status of the first OS (the one OS that was replaced) to inactive and the status of the second OS (the new OS) to active.

Deleting the first OS and setting its status to inactive only after the second OS has been successfully installed, has the advantage that in case the second OS fails to be installed, the SE is still operational as it is not left without any active OS. In case an OS is set to active but is not available on the SE 100, the update agent 110 ensures that the OS is downloaded again.

In case that the check in step S61 revels that there is no backup version of the second OS to be newly installed, the update agent 110 proceeds with replacing the first OS with the second OS. Preferably this is realized by downloading the second OS in step S63 and replacing the first OS 130 with the downloaded second OS 131 within the SE 100 in step S65. The replacement step S65 may be implemented by installing the second OS and deleting the first OS. Preferably, as a precautionary measure, the first OS is stored until or is deleted only if the second OS is installed or at least is available and ready to be installed on the SE 100. In this respect, the provision of a secure backup of the first OS, as described above in connection to Fig. 3, apply here as well.

Thereafter, the update agent 110 may set the status of the first OS (the one OS that was replaced) to inactive and the status of the second OS (the new active OS) to active in step S67. Preferably, the second OS is downloaded from an external image providing server, which can be the same as the storage provider used for the backup of inactive operating systems. However, separate memory spaces can be provided for keeping the backed up operating systems separately from new operating systems.

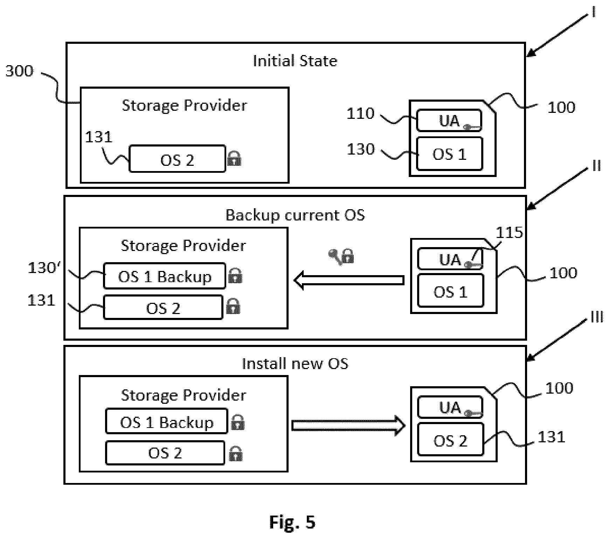

FIG. 5 shows several stages assumed by the system of Fig. 1 during the execution of the above described method of managing multiple operating systems for a secure element.

The initial state I shows a view of the secure element 100 and the storage provider 300 after the method of Fig. 2a has been executed. In particular, in the initial state I the secure element 100 stores only one active operating system, the OS1 130. Other (inactive or not yet downloaded) operating systems, such as the OS2 131, are stored within the storage provider 300.

Stage II shows the view of the system after the active operating system, OS1, has been backed up on the storage provider, that is, at the end of the secure backup step S5 in Fig. 2. During this step the update agent has used its own private key, indicated in Fig. 5 by reference numeral 115 to create an encrypted image of OS1 130. This encrypted image is sent to the storage provider 300 and stored thereon as the OS1 backup 130'.

Stage III shows the view of the system after the second operating system OS2 131 has been loaded and installed in the place of the first OS1 130 within the secure element 100.

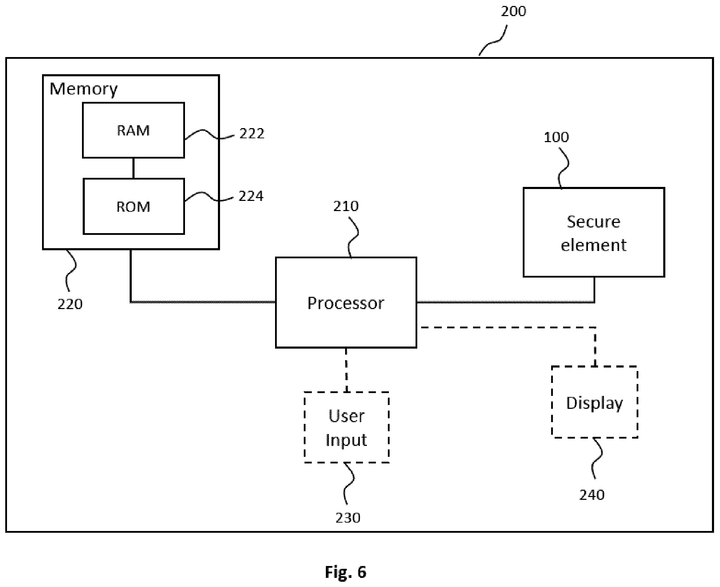

FIG. 6 shows a block diagram of components of an apparatus according to an embodiment. The apparatus may be a device in communication with a secure element (e.g., the SE 100 in Fig. 1), or a device, the secure element 100 is embedded on, such as, for instance the device 200 of Fig. 1. The apparatus may have a processor 210, a memory 220 closely coupled to the processor and comprised of a RAM 222 and a ROM 224, and optionally, a user input 230 and a display 240. The processor may be connected to the secure element 100 of Fig. 1, through a suitable interface, such as the interface 160 of Fig. 2, to control the secure element 100. In particular, the processor 210 may request the SE 100 to perform backup of inactive operating systems currently stored in a memory of the secure element and/or request the SE 100 to perform a load (re-load) of another operating system.

The methods and apparatus as described through the embodiments above, allow an update agent to keep only an active operating system stored within a secure element and to outsource inactive operating systems to an external storage. This way, any operating system not currently selected in the secure element is not occupying space in the secure element. By loading the selected operating system each time, and creating and managing backups of the other operating systems will allow secure elements with limited memory to handle multiple operating systems in a resource efficient way. A viable solution for limited space secure elements, such as lower priced platforms, is thus provided. Moreover, for high end products this solution allows the use and
switch between multiple operating systems in a single secure element without being dependent on the free space in the secure element.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for managing a plurality of operating systems for a secure element (100) by an update agent (110) within the secure element (100), the method comprising:
- identifying (S1) a first operating system, OS1 (130), being actively used by the secure element (100);
- identifying (S2) inactive operating systems within the secure element, which are operating systems which have been loaded onto the secure element (100) and are not actively used by the secure element (100); and
- allocating (S3) the inactive operating systems to a storage provider (300), which is a memory external of the secure element,
- wherein the inactive operating systems are kept externally in the storage provider and ready for being loaded onto the secure element on demand.

2. The method according to claim 1, wherein identifying an operating systems as active or inactive comprises checking a status indicator (135) of the operating system, wherein the status indicator (135) is a data structure located on the secure element (100) and storing for each operating system of the plurality of operating systems a corresponding status.

3. The method according to claim 1 or 2, further comprising:
- receiving (S4) a request to load a second operating system, OS2 (131), as a new active operating system on the secure element (100);
- performing (S5) a secure backup of the first operating system, OS1 (130); and
- loading (S6) the second operating system, OS2 (131), onto the secure element (100).

4. The method according to any one of the preceding claims, wherein allocating the inactive operating systems to a storage provider (300) comprises performing a secure backup of the inactive operating systems.

5. The method according to any one of the preceding claims, wherein performing a secure backup of an active or inactive operating system, comprises creating an image of the operating system, and providing the operating system image to the storage provider (300) to be stored thereon.

6. The method according to claim 5, wherein the operating system image (130') is created by encapsulating the operating system (130) and encrypting it with cryptographic keys (115) supported by the update agent (110).

7. The method according to any one of claims 2 to 6, wherein loading the second operating system (131) comprises:
- checking (S61) whether there is a backup version of the second operating system (131) allocated within the storage provider (300);
- if there is a backup version allocated within the storage provider (300), retrieving (S62) the backup version; and
- replacing (S63) the first operating system (130) with the backup version of the second operating system (131).

8. The method according to claim 7, further comprising, if there is no backup version of the second operating system allocated within the storage provider, downloading (S63) the second operating system (131) and replacing (S65) the first operating system (130) with the second operating system (131).

9. An update agent (110) for managing a plurality of operating systems for a secure element (100), wherein the update agent (110) is configured to:
- identify a first operating system, OS1 (130), being actively used by the secure element (100);
- identify inactive operating systems within the secure element (100), which are not actively used by the secure element (100); and
- allocate the inactive operating systems to a storage provider (300), which is a memory external of the secure element,
- wherein the inactive operating systems are kept externally in the storage provider and ready for being loaded onto the secure element on demand.

10. The update agent (110) according to claim 9, being configured to allocate the inactive operating systems by performing a secure backup of the inactive operating systems onto the storage provider (300).

11. The update agent (110) according to claims 9 or 10, being configured to:
- receive a request to load a second operating system, OS2 (131), as a new active operating system on the secure element (100);
- perform a secure backup of the first operating system, OS1 (130); and
- load the second operating system, OS2 (131), onto the secure element (100).

12. The update agent (110) according to any one of claims 9 to 11, being configured to create an image (130') of an operating system, and provide the operating system image (130') to the storage provider (300) to be stored thereon.

13. The update agent (110) according to claim 12, wherein the update agent (110) is configured to create the operating system image (130') by encapsulating the operating system (130) and securing it with cryptographic keys (115) supported by the update agent (110).

14. The update agent (110) according to any one of claims 9 to 13, wherein the update agent (110) is configured to:
- check whether there is a backup version of the second operating system (131) allocated within the storage provider (300);
- if there is a backup version allocated within the storage provider (300), retrieve the backup version and switch the first operating system (130) with the backup version of the second operating system (131); and load the second operating system (131) and delete the first operating system (130), otherwise; and
- set the status of the second operating system (131) to active and the status of the first operating system (130) to inactive.

15. A secure element (100) comprising an update agent (110), the update agent (110) being configured to perform the method according to any one of claims 1 to 8.

## Patentansprüche

1. Ein Verfahren zum Verwalten einer Vielzahl von Betriebssystemen für ein Sicherheitselement (100) durch einen Update-Agenten (110) innerhalb des Sicherheitselements (100), wobei das Verfahren aufweist:
- Identifizieren (S1) eines ersten Betriebssystems, OS1 (130), das aktiv vom Sicherheitselement (100) verwendet wird;
- Identifizieren (S2) von inaktiven Betriebssystemen innerhalb des Sicherheitselements, bei denen es sich um Betriebssysteme handelt, die auf das Sicherheitselement (100) geladen wurden und nicht aktiv vom Sicherheitselement (100) verwendet werden; und
- Zuweisen (S3) der inaktiven Betriebssysteme zu einem Speicheranbieter (300), welcher ein Speicher außerhalb des Sicherheitselements ist,
wobei die inaktiven Betriebssysteme extern in dem Speicheranbieter gehalten werden und bereitgehalten werden, um bei Bedarf auf das Sicherheitselement geladen zu werden.

2. Das Verfahren nach Anspruch 1, wobei das Identifizieren eines Betriebssystems als aktiv oder inaktiv das Überprüfen eines Statusindikators (135) des Betriebssystems aufweist, wobei der Statusindikator (135) eine Datenstruktur ist, die sich auf dem Sicherheitselement (100) befindet, und das Speichern eines entsprechenden Status für jedes Betriebssystem der mehreren Betriebssysteme.

3. Das Verfahren nach Anspruch 1 oder 2, das ferner aufweist:
- Empfangen (S4) einer Anforderung zum Laden eines zweiten Betriebssystems, OS2 (131), als neues aktives Betriebssystem auf das Sicherheitselement (100);
- Durchführen (S5) einer sicheren Sicherung des ersten Betriebssystems, OS1 (130); und
- Laden (S6) des zweiten Betriebssystems, OS2 (131), auf das Sicherheitselement (100).

4. Das Verfahren nach einem der vorstehenden Ansprüche, wobei das Zuweisen der inaktiven Betriebssysteme an einen Speicheranbieter (300) das Durchführen einer sicheren Sicherung der inaktiven Betriebssysteme aufweist.

5. Das Verfahren nach einem der vorstehenden Ansprüche, wobei das Durchführen einer sicheren Sicherung eines aktiven oder inaktiven Betriebssystems das Erstellen eines Abbilds des Betriebssystems aufweist und das Bereitstellen des Betriebssystemabbilds an den Speicheranbieter (300) zum Speichern darauf.

6. Das Verfahren nach Anspruch 5, wobei das Betriebssystemabbild (130') erstellt wird, indem das Betriebssystem (130) gekapselt und mit kryptografischen Schlüsseln (115) verschlüsselt wird, die vom Aktualisierungsagenten (110) unterstützt werden.

7. Das Verfahren nach einem der Ansprüche 2 bis 6, wobei das Laden des zweiten Betriebssystems (131) aufweist:
- Überprüfen (S61), ob eine Sicherungsversion des zweiten Betriebssystems (131) innerhalb des Speicheranbieters (300) zugewiesen ist;
- wenn eine Sicherungsversion innerhalb des Speicheranbieters (300) zugewiesen ist, Abrufen (S62) der Sicherungsversion; und
- Ersetzen (S63) des ersten Betriebssystems (130) durch die Sicherungsversion des zweiten Betriebssystems (131).

8. Das Verfahren nach Anspruch 7, das ferner aufweist, wenn keine Sicherungsversion des zweiten Betriebssystems innerhalb des Speicheranbieters zugewiesen ist, Herunterladen (S63) des zweiten Betriebssystems (131) und Ersetzen (S65) des ersten Betriebssystems (130) durch das zweite Betriebssystem (131).

9. Ein Update-Agent (110) zum Verwalten einer Vielzahl von Betriebssystemen für ein Sicherheitselement (100), wobei der Update-Agent (110) konfiguriert ist zum
- Identifizieren eines ersten Betriebssystems, OS1 (130), das aktiv vom Sicherheitselement (100) verwendet wird;
- Identifizieren inaktiver Betriebssysteme innerhalb des Sicherheitselements (100), die nicht aktiv vom Sicherheitselement (100) verwendet werden; und
- Zuweisen der inaktiven Betriebssysteme zu einem Speicheranbieter (300), welcher ein Speicher außerhalb des Sicherheitselements ist,
wobei die inaktiven Betriebssysteme extern in dem Speicheranbieter gehalten werden und bereitgehalten werden, um bei Bedarf auf das Sicherheitselement geladen zu werden.

10. Der Update-Agent (110) gemäß Anspruch 9, der so konfiguriert ist, dass er die inaktiven Betriebssysteme zuweist, indem er eine sichere Sicherung der inaktiven Betriebssysteme auf dem Speicheranbieter (300) durchführt.

11. Der Update-Agent (110) gemäß Anspruch 9 oder 10, der konfiguriert ist zum
- Empfangen einer Anforderung zum Laden eines zweiten Betriebssystems, OS2 (131), als neues aktives Betriebssystem auf das Sicherheitselement (100);
- Durchführen einer sicheren Sicherung des ersten Betriebssystems, OS1 (130); und
- Laden des zweiten Betriebssystems OS2 (131) auf das Sicherheitselement (100).

12. Der Update-Agent (110) gemäß einem der Ansprüche 9 bis 11, der so konfiguriert ist, dass er ein Abbild (130') eines Betriebssystems erstellt und das Betriebssystemabbild (130') dem Speicheranbieter (300) zur Speicherung bereitstellt.

13. Der Update-Agent (110) gemäß Anspruch 12, wobei der Update-Agent (110) so konfiguriert ist, dass er das Betriebssystemabbild (130') erstellt, indem er das Betriebssystem (130) kapselt und mit kryptografischen Schlüsseln (115) sichert, die vom Update-Agenten (110) unterstützt werden.

14. Der Update-Agent (110) gemäß einem der Ansprüche 9 bis 13, wobei der Update-Agent (110) konfiguriert ist zum
- Überprüfen, ob eine Sicherungsversion des zweiten Betriebssystems (131) innerhalb des Speicheranbieters (300) zugewiesen ist;
- wenn eine Sicherungsversion innerhalb des Speicheranbieters (300) zugewiesen ist, Abrufen der Sicherungsversion und Ersetzen des ersten Betriebssystems (130) durch die Sicherungsversion des zweiten Betriebssystems (131); und andernfalls Laden des zweiten Betriebssystems (131) und Löschen des ersten Betriebssystems (130); und
- Setzen des Status des zweiten Betriebssystems (131) auf "aktiv" und den Status des ersten Betriebssystems (130) auf "inaktiv".

15. Ein Sicherheitselement (100) mit einem Update-Agent (110), wobei der Update-Agent (110) so konfiguriert ist, dass er das Verfahren gemäß einem der Ansprüche 1 bis 8 ausführt.

## Revendications

1. Une méthode de gestion d'une pluralité de systèmes d'exploitation pour un élément sécurisé (100) par un agent de mise à jour (110) à l'intérieur de l'élément sécurisé (100), la méthode comprenant:
- identifiant (S1) un premier système d'exploitation, OS1 (130), utilisé activement par l'élément sécurisé (100);
- identifier (S2) systèmes d'exploitation inactifs à l'intérieur de l'élément sécurisé, qui sont systèmes d'exploitation qui ont été chargés sur l'élément sécurisé (100) et qui ne sont pas utilisés activement par l'élément sécurisé (100); et
- allouer (S3) les systèmes d'exploitation inactifs à un fournisseur de stockage (300), qui est une mémoire externe à l'élément de sécurité,
- dans lequel les systèmes d'exploitation inactifs sont conservés à l'extérieur dans le fournisseur de stockage et prêts à être chargés sur l'élément de sécurité à la demande.

2. La méthode selon la revendication 1, dans laquelle l'identification d'un système d'exploitation comme actif ou inactif comprend le contrôle d'un indicateur d'état (135) du système d'exploitation, dans laquelle l'indicateur d'état (135) est une structure de données située sur l'élément de sécurité (100) et stocke pour chaque système d'exploitation de la pluralité de systèmes d'exploitation un état correspondant.

3. La méthode selon la revendication 1 ou 2, comprenant en outre:
- recevoir (S4) une demande de chargement d'un deuxième système d'exploitation, OS2 (131), en tant que nouveau système d'exploitation actif sur l'élément sécurisé (100);
- effectuant (S5) une sauvegarde sécurisée du premier système d'exploitation, OS1 (130); et
- chargement (S6) du second système d'exploitation, OS2 (131), sur l'élément sécurisé (100).

4. La méthode selon l'une quelconque des revendications précédentes, dans laquelle l'attribution des systèmes d'exploitation inactifs à un fournisseur de stockage (300) comprend l'exécution d'une sauvegarde sécurisée des systèmes d'exploitation inactifs.

5. La méthode selon l'une quelconque des revendications précédentes, dans laquelle l'exécution d'une sauvegarde sécurisée d'un système d'exploitation actif ou inactif, comprend la création d'une image du système d'exploitation, et la fourniture de l'image du système d'exploitation au fournisseur de stockage (300) pour qu'elle y soit stockée.

6. La méthode selon la revendication 5, dans laquelle l'image du système d'exploitation (130') est créée en encapsulant le système d'exploitation (130) et en le cryptant avec des clés cryptographiques (115) supportées par l'agent de mise à jour (110).

7. La méthode selon l'une quelconque des revendications 2 à 6, dans laquelle le chargement du second système d'exploitation (131) comprend:
- vérifier (S61) s'il existe une version de sauvegarde du second système d'exploitation (131) attribuée au sein du fournisseur de stockage (300);
- s'il existe une version de sauvegarde attribuée au sein du fournisseur de stockage (300), récupération (S62) de la version de sauvegarde; et
- remplacer (S63) le premier système d'exploitation (130) par la version de sauvegarde du second système d'exploitation (131).

8. La méthode selon la revendication 7, comprenant en outre, s'il n'y a pas de version de sauvegarde du deuxième système d'exploitation attribuée au sein du fournisseur de stockage, le téléchargement (S63) du deuxième système d'exploitation (131) et le remplacement (S65) du premier système d'exploitation (130) par le deuxième système d'exploitation (131).

9. Un agent de mise à jour (110) pour gérer une pluralité de systèmes d'exploitation pour un élément sécurisé (100), dans lequel l'agent de mise à jour (110) est configuré pour:
- identifier un premier système d'exploitation, OS1 (130), qui est activement utilisé par l'élément sécurisé (100);
- identifier systèmes d'exploitation inactifs à l'intérieur de l'élément sécurisé (100), qui ne sont pas utilisés activement par l'élément sécurisé (100); et
- allouer les systèmes d'exploitation inactifs à un fournisseur de stockage (300), qui est une mémoire externe à l'élément de sécurité,
- dans lequel les systèmes d'exploitation inactifs sont conservés à l'extérieur dans le fournisseur de stockage et prêts à être chargés sur l'élément de sécurité à la demande.

10. L'agent de mise à jour (110) selon la revendication 9, étant configuré pour attribuer les systèmes d'exploitation inactifs en effectuant une sauvegarde sécurisée des systèmes d'exploitation inactifs sur le fournisseur de stockage (300).

11. L'agent de mise à jour (110) selon les revendications 9 ou 10, étant configuré pour:
- recevoir une demande de chargement d'un deuxième système d'exploitation, OS2 (131), en tant que nouveau système d'exploitation actif sur l'élément sécurisé (100);
- effectuer une sauvegarde sécurisée du premier système d'exploitation, OS 1 (130); et
- charger le second système d'exploitation, OS2 (131), sur l'élément sécurisé (100).

12. L'agent de mise à jour (110) selon l'une quelconque des revendications 9 à 11, étant configuré pour créer une image (130') d'un système d'exploitation, et pour fournir l'image du système d'exploitation (130') au fournisseur de stockage (300) pour qu'elle y soit stockée.

13. L'agent de mise à jour (110) selon la revendication 12, dans lequel l'agent de mise à jour (110) est configuré pour créer l'image du système d'exploitation (130') en encapsulant le système d'exploitation (130) et en le sécurisant avec des clés cryptographiques (115) supportées par l'agent de mise à jour (110).

14. L'agent de mise à jour (110) selon l'une quelconque des revendications 9 à 13, dans lequel l'agent de mise à jour (110) est configuré pour:
- vérifier s'il existe une version de sauvegarde du second système d'exploitation (131) allouée au sein du fournisseur de stockage (300);
- s'il y a une version de sauvegarde allouée au sein du fournisseur de stockage (300), récupérer la version de sauvegarde et commuter le premier système d'exploitation (130) avec la version de sauvegarde du second système d'exploitation (131); et charger le second système d'exploitation (131) et supprimer le premier système d'exploitation (130), sinon; et
- définir l'état du second système d'exploitation (131) comme actif et l'état du premier système d'exploitation (130) comme inactif.

15. Un élément sécurisé (100) comprenant un agent de mise à jour (110), l'agent de mise à jour (110) étant configuré pour exécuter la méthode selon l'une quelconque des revendications 1 à 8.
